(19) Europäisches Patentamt
European Patent Office
Office européen des brevets

(11) **EP 4 311 101 B1**

(12) **EUROPEAN PATENT SPECIFICATION**

(45) Date of publication and mention
of the grant of the patent:
**04.06.2025 Bulletin 2025/23**

(21) Application number: **22806282.4**

(22) Date of filing: **16.03.2022**

(51) International Patent Classification (IPC):
*H02P 6/28* (2016.01)          *H02P 29/20* (2016.01)
*H02H 7/08* (2006.01)          *H02P 27/08* (2006.01)

(52) Cooperative Patent Classification (CPC):
**H02P 6/28; H02H 7/0838; H02P 27/08**

(86) International application number:
**PCT/CN2022/081177**

(87) International publication number:
**WO 2022/237307 (17.11.2022 Gazette 2022/46)**

(54) **POWER TOOL**

ELEKTROWERKZEUG

OUTIL ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2021   CN 202110525390
12.05.2021   CN 202110518929
12.05.2021   CN 202110519047
06.09.2021   CN 202111036354**

(43) Date of publication of application:
**24.01.2024 Bulletin 2024/04**

(73) Proprietor: **Nanjing Chervon Industry Co., Ltd.
Nanjing, Jiangsu 211106 (CN)**

(72) Inventors:
• **ZHU, Hong**
**Nanjing, Jiangsu 211106 (CN)**
• **WANG, Pengchen**
**Nanjing, Jiangsu 211106 (CN)**

(74) Representative: **Sun, Yiming
HUASUN Patent- und Rechtsanwälte
Friedrichstraße 33
80801 München (DE)**

(56) References cited:
CN-A- 102 612 224          CN-A- 104 302 028
CN-A- 112 403 405          US-A1- 2008 238 370
US-A1- 2019 337 065          US-A1- 2020 162 007
US-A1- 2020 162 007

**Description**

**TECHNICAL FIELD**

The present application relates to a power tool and, in particular, to a control method applicable to an alternating current power tool.

**BACKGROUND**

Under a heavy load, since the power supply capability of a grid is sufficiently great, an alternating current power tool, especially for a high-voltage brushless tool, is prone to an overcurrent, which not only easily damages electronic components, but also significantly affects the feeling of using the power tool to a relatively large extent.

US 2020/162007 A1 discloses an electrical device including a device housing, a load supported by the device housing, the load being operable to output at least about 1800 watts, and a device terminal electrically connected to the load; a battery pack including a pack housing, battery cells supported by the pack housing, the battery cells being electrically connected and having a nominal voltage of up to about 20 volts, and a pack terminal electrically connectable to the device terminal to transfer current between the battery pack and the electrical device; and a controller operable to control the transfer of current.

US 2019/337065 A1 discloses a power tool including a brushless motor, a rectifier circuit configured to rectify an AC voltage supplied from an AC power supply and output a rectified voltage, an inverter circuit configured to perform switching actions with respect to the rectified voltage to be supplied to the brushless motor, a controller configured to control the switching actions of the inverter circuit, a trigger having an operating part being operable by a user, a switch rendered ON and OFF in accordance with an operation performed in the operating part, wherein when the switch is ON, the inverter circuit is electrically connected to the AC power supply whereas when the switch is OFF, and the inverter circuit is electrically disconnected from the AC power supply, and a power supply circuit connected between the switch and the AC power supply and configured to supply a voltage to the controller.

**SUMMARY**

To solve the deficiencies of the related art, the present application provides a current limiting control method applicable to an alternating current power tool, which can effectively suppress a large current under a heavy load without affecting the feeling of using the power tool.

To achieve the preceding object, the present application adopts the technical solutions described in the independent claim 1.

In some examples, the random variation of the period of the drive signal within the second preset period range follows the law of a normal distribution.

In some examples, a period of the preset waveform is the same as the period of the drive signal or the duration of each time interval among the periodic time intervals.

In some examples, the preset waveform is set as a triangular waveform or a waveform including a curve.

In some examples, a preset current threshold corresponding to the end of the present time interval is less than a preset current threshold corresponding to the beginning of the present time interval.

In some examples, the power tool further includes a power supply input device and a rectifier module, where the power supply input device is configured to access a power supply required by the power tool when working, and the rectifier module is configured to be electrically connected to the power supply input device and convert electrical energy of the power supply input device into a direct current for the power tool to use.

In some examples, the power tool further includes a power supply circuit and a capacitor circuit, where the power supply circuit is electrically connected to the rectifier module to supply power to at least the control module, and the capacitor circuit is electrically connected between the rectifier module and the driver circuit.

In some examples, the capacitor circuit includes at least one electrolytic capacitor.

In some examples, the ratio of the capacitance value of the electrolytic capacitor to the rated power of the electric motor is higher than 20 $\mu$F/kW and lower than 80 $\mu$F/kW.

In some examples, the rectifier module includes a rectifier bridge constituted by four diodes D1, D2, D3, and D4.

In some examples, the current detection module is electrically connected between the control module and the electric motor and includes multiple current detection resistors.

In some examples, the electric motor is configured to be a brushless direct current motor.

In some examples, the brushless direct current motor is controlled by the drive signal.

In some examples, the power tool further includes a rotational speed detection module configured to acquire a rotational speed of the electric motor and a position of a rotor of the electric motor. A large current occurring during the work of the electric motor is simply and effectively suppressed and the feeling of using the power tool is not affected. Thus, the feeling of using the power tool is optimized to a relatively large extent, and the reliability and life of the power tool are improved.

**BRIEF DESCRIPTION OF DRAWINGS**

FIG. 1 is a perspective view of a power tool as an example;

FIG. 2 is a circuit block diagram of circuitry as an example;

FIG. 3 is a circuit block diagram of a rectifier module as an example;

FIG. 4 is a circuit block diagram of a current detection module as an example;

FIG. 5 is a circuit block diagram of a current detection module as another example;

FIG. 6 is a diagram showing waveforms of control signals of an electric motor;

FIG. 7 is a waveform diagram showing a control method for limiting a current of an electric motor;

FIG. 8 is a flowchart of a control method for limiting a current of an electric motor;

FIG. 9 is a diagram showing a waveform of a pulse-width modulation (PWM) signal and a waveform of a current limiting period as a first example;

FIG. 10 is a waveform diagram showing the continuous variation of a frequency of a PWM signal as a first example;

FIG. 11 is a flowchart of a control method of an electric motor as a first example;

FIG. 12 is a diagram showing a waveform of a PWM signal and a waveform of a phase current of an electric motor as a second example;

FIG. 13 is a flowchart of a control method of an electric motor as a second example;

FIG. 14 is a diagram showing a waveform of a PWM signal and a waveform of a phase current of an electric motor as a third example;

FIG. 15 is a flowchart of a control method of an electric motor as a third example;

FIG. 16 is a diagram showing a waveform of a phase current of an electric motor when a preset current threshold is a fixed value;

FIG. 17a is a diagram showing a waveform of a PWM signal and a waveform of a phase current of an electric motor as a fourth example;

FIG. 17b is a diagram showing a waveform of a PWM signal and a waveform of a phase current of an electric motor as another implementation of a fourth example;

FIG. 18 is a flowchart of a control method of an electric motor as a fourth example; and

FIG. 19 is a flowchart of a control method of an electric motor as another implementation of a fourth example.

**DETAILED DESCRIPTION**

The present application is described below in detail in conjunction with drawings and examples.

A power tool in the present application may be a handheld power tool, a garden tool, or a garden vehicle such as a vehicle-type mower, which is not limited here. The power tool in the present application includes, but is not limited to, alternating current power tools such as a sander, a drill bit, an impact driver, a tapper, and a fastener driver. As long as these power tools can adopt the essence of the technical solutions disclosed below, these power tools may fall within the scope of the present application. Additionally, it is to be noted that for ease of description, only part, not all, of structures related to the present application are illustrated in the drawings.

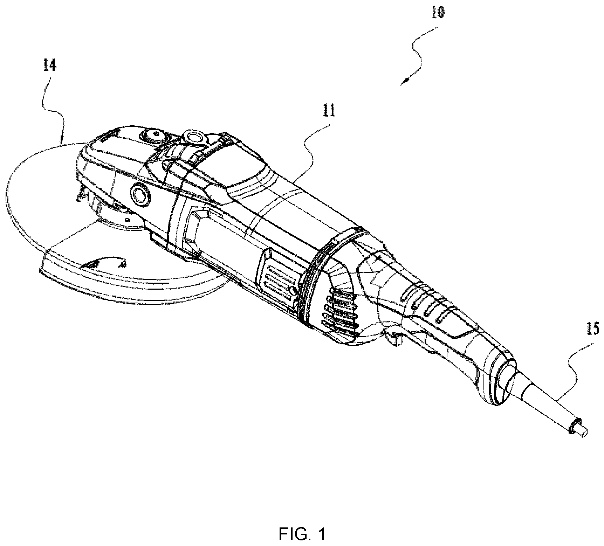

Referring to FIG. 1, a power tool 10 is shown exemplarily. The power tool is an angle grinder. The power tool 10 mainly includes a housing 11, an electric motor 13, a functional member 14, an alternating current power supply input device 15, and circuitry 12 disposed in the housing 11.

The electric motor 13 includes stator windings and a rotor. In some examples, the electric motor 13 is a three-phase brushless motor including the rotor with a permanent magnet and three-phase stator windings U, V, and W electronically commutated. In some examples, the three-phase stator windings U, V, and W adopt a star connection. In other examples, the three-phase stator windings U, V, and W adopt a delta connection. However, it must be understood that other types of brushless motors are also within the scope of the present disclosure. The brushless motor may include less or more than three phases.

The functional member 14 is used for implementing the function of the power tool 10. The functional member 14 is driven by the electric motor 13 to operate. For different power tools, functional elements are different. For the angle grinder, the functional member 14 is a grinding disc used for implementing a grinding or cutting function.

The alternating current power supply input device 15 is configured to access a power supply required by the power tool 10 to work. As an example, a power supply in this example is optionally configured to be an alternating current power supply. Specifically, the alternating current power supply input device 15 includes an alternating current plug to access alternating current mains of 120 V or 220 V.

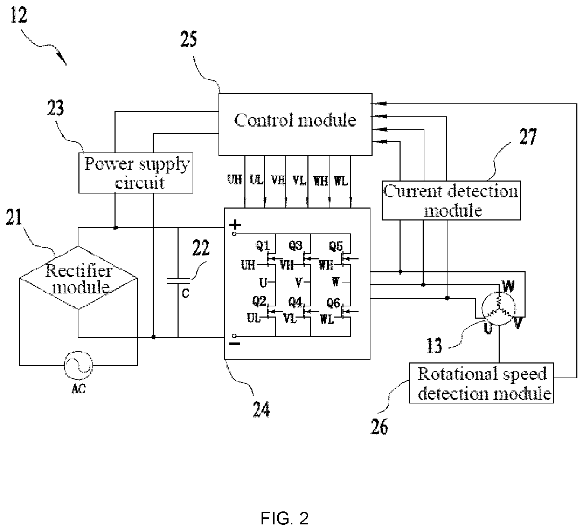

Referring to FIG. 2, the circuitry 12 of the power tool 10 as an example mainly includes a rectifier module 21, a capacitor circuit 22, a power supply circuit 23, a driver circuit 24, a control module 25, a rotational speed detection module 26, and a current detection module 27.

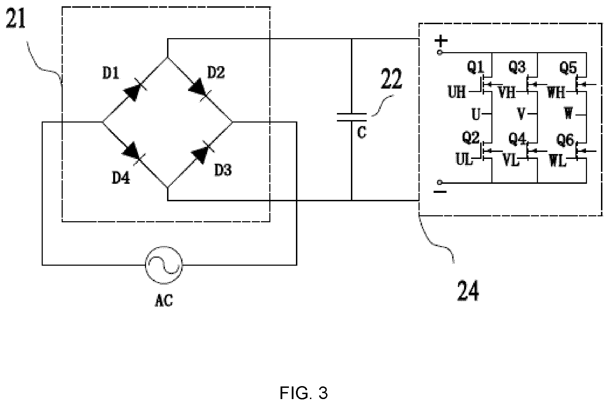

The rectifier module 21 constitutes a direct current unit of the power tool 10. The rectifier module 21 is configured to receive an alternating current from the alternating current power supply input device 15 and output a direct current bus voltage. That is, the rectifier module 21 is configured to convert the alternating current inputted by the alternating current power supply input device 15 into pulsating direct current output. The rectifier module 21 is electrically connected to the alternating current power supply input device 15. As an example, referring to FIG. 3, the rectifier module 21 includes a rectifier bridge constituted by four diodes D1, D2, D3, and D4, which converts the alternating current into the pulsating direct current output in the same direction with the unilateral conductivity and voltage drop of the diodes.

The capacitor circuit 22 is connected in parallel to a direct current bus of the power tool 10. That is, the capacitor circuit 22 is connected in parallel between the positive and negative electrodes of the direct current unit in the circuitry 12. As an example, the capacitor circuit 22 is optionally connected in parallel between the rectifier module 21 and the driver circuit 24. Specifically, the capacitor circuit 22 includes an electrolytic capacitor C. The capacitor circuit 22 is electrically connected to the rectifier module 21, and a pulsating direct current outputted by the rectifier module 21 is filtered and converted into smooth direct current output by the electrolytic capacitor C so that harmonic interference in the pulsating direct current is reduced. Optionally, the ratio of the capacitance value of the electrolytic capacitor C to the rated power of the electric motor 13 is higher than 20 $\mu$F/kW and lower than 80 $\mu$F/kW. In this manner, a space can be saved, and it is ensured that there is no physically large capacitive element in the hardware circuit.

The power supply circuit 23 is configured to supply power to at least the control module 25. As an example, the power supply circuit 23 is electrically connected to the rectifier module 21 and converts the electrical energy rectified by the rectifier module 21 into power supply voltage output adaptable to the control module 25. For example, to supply the power to the control module 25, the power supply circuit 23 reduces a voltage which is from the alternating current power supply input device 15 and is rectified by the rectifier module 21 to 15 V, so as to supply the power to the control module 25.

The driver circuit 24 is electrically connected to the rectifier module 21 and is configured to drive the electric motor 13. An input terminal of the driver circuit 24 receives the voltage from the rectifier module 21. Under the drive of the drive signal outputted by the control module 25, the voltage is distributed to each phase winding on the stator of the electric motor 13 in a certain logical relationship so that the electric motor 13 is started and generates continuous torque. Specifically, the driver circuit 24 includes multiple electronic switches. In some examples, an electronic switch includes a field-effect transistor (FET). In other examples, an electronic switch includes an insulated-gate bipolar transistor (IGBT) or the like. In some examples, the driver circuit 24 is a three-phase bridge circuit. The driver circuit 24 includes three electronic switches Q1, Q3, and Q5 configured as high-side switches and three electronic switches Q2, Q4, and Q6 configured as low-side switches.

The three electronic switches Q1, Q3, and Q5 as the high-side switches are disposed between a power supply line of the rectifier module 21 and phase coils of the electric motor 13 separately. The three electronic switches Q2, Q4, and Q6 as the low-side switches are disposed between the phase coils of the electric motor 22 and a ground line separately.

Gate terminals UH, UL, VH, VL, WH, and WL of the six electronic switches Q1 to Q6 are electrically connected to the control module 25, and each drain or source of each of the electronic switches is connected to the stator winding of the electric motor 13. The electronic switches Q1 to Q6 are turned on or off at a certain frequency according to drive signals outputted by the control module 25 to change the power state loaded by the rectifier module 21 on the winding of the electric motor 13.

The driver circuit 24 is a circuit for driving, by switching the power-on state of each phase winding of the electric motor 13 and controlling the power-on current of each phase winding, the electric motor 13 to rotate. The sequence in which phase windings are on and the time when each phase winding is on depend on the position of the rotor. To make the electric motor 13 rotate, the driver circuit 24 has multiple drive states. In a drive state, the stator winding of the electric motor 13 may generate a magnetic field, and the control module 25 outputs a control signal based on a different position of the rotor to control the driver circuit 24 to switch a drive state. In this manner, the magnetic field generated by the stator winding is rotated so that the rotor is driven to rotate, thereby driving the electric motor 13.

The rotational speed detection module 26 is configured to acquire at least one of a measured rotational speed of the electric motor 13 and the position of the rotor. In some examples, the rotational speed detection module 26 includes a sensor which can directly detect the speed and position of the electric motor 13, such as a Hall sensor. In other examples, the rotational speed detection module 26 is configured to estimate the position of the rotor of the electric motor 13 according to at least phase voltages of the electric motor 13 and current values of the stator windings.

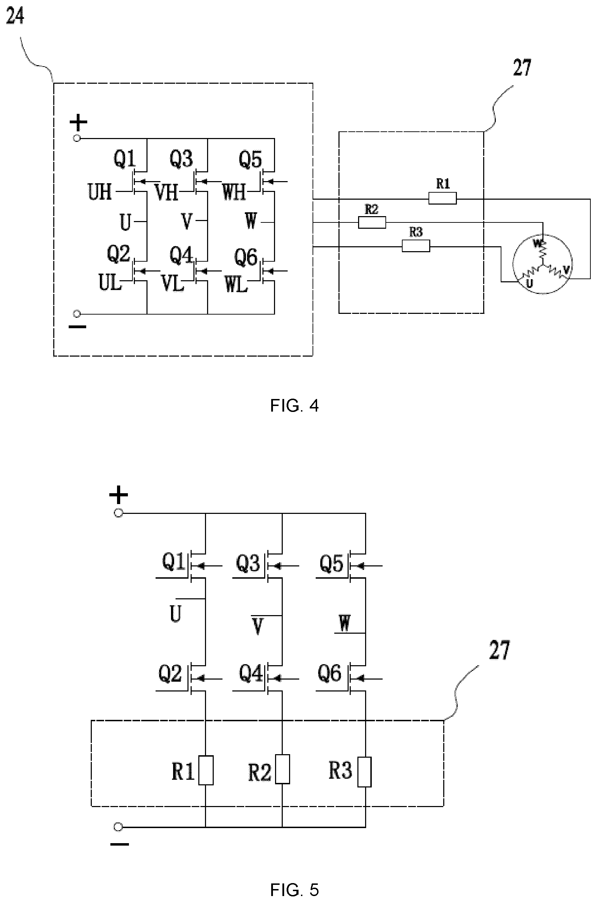

The current detection module 27 is configured to collect a current of the electric motor 13, where the current may be a bus current of the electric motor 13 or a phase current of each phase winding of the electric motor 13. As an example, the current detection module 27 detects the phase current of each phase winding of the electric motor 13, and the bus current of the electric motor 13 may be calculated from the detected three-phase current values. In some examples, the current detection module 27 includes a Hall current sensor for directly detecting the phase current of each phase winding of the electric motor 13. As another example, referring to FIG. 4, current detection resistors R1, R2, and R3 are separately connected in series between the driver circuit 24 and the phase windings of the electric motor 13, and the current detection module 27 may calculate the phase current of each phase winding or the bus current by detecting voltages across the detection resistors. Specifically, the current detection module 27 may calculate phase currents of the three-phase stator windings U, V, and W by detecting the voltages across the current detection resistors R1, R2, and R3 separately. As another example, referring to FIG. 5, the current detection module 27 is configured to detect the internal resistance of an electronic switch in the on state in the driver circuit 24 and calculate, based on the internal resistance of the electronic switch in the on state and a voltage value across the electronic switch, the current flowing through the electronic switch, where the current of the electronic switch is a phase current of the corresponding winding of the electric motor 13. Specifically, the current detection module 27 separately detects a voltage across each of the three drive switches Q1, Q3, and Q5 as the high-side switches and calculates the phase currents of the corresponding three-phase stator windings U, V, and W. In this manner, the power tool can detect the phase currents of the corresponding windings of the electric motor 22 without additional hardware, thereby saving a cost.

The control module 25 is electrically connected to at least the power supply circuit 23, the driver circuit 24, and the current detection module 27 and is configured to control the driver circuit 24 to work. In some examples, the control module 25 may be a dedicated control chip (such as a microcontroller unit (MCU)).

A first example of the present application will be described next.

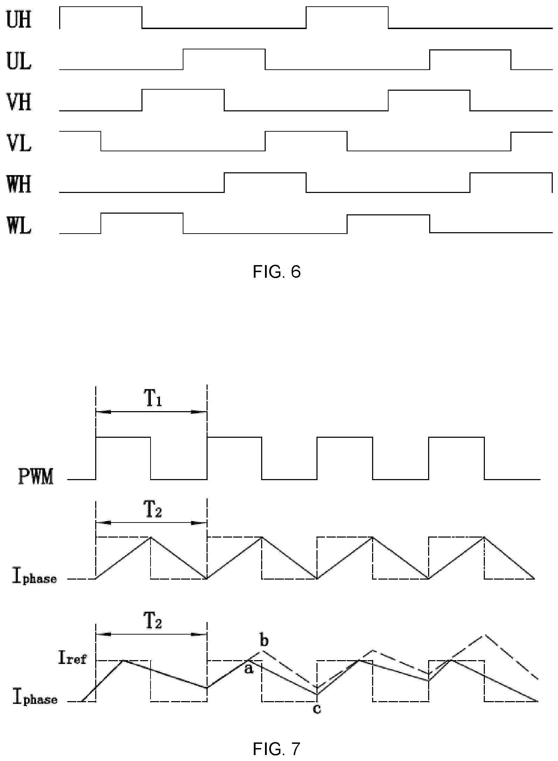

Referring to FIGS. 6 and 7, the control module 25 outputs the drive signals, and the drive signals are separately applied to the gate terminals UH, UL, VH, VL, WH, and WL of the six electronic switches Q1 to Q6 and are used for controlling the conduction states of the multiple electronic switches Q1 to Q6 so that the electric motor 13 is driven. The electric motor 13 is configured to be a three-phase brushless direct current motor, and a drive signal is configured to be a PWM signal. A period of the PWM signal is denoted by $T_1$, and the control module 25 limits the current of the electric motor within periodic time intervals $T_2$. A periodic time interval here may be understood as a current limiting period of the electric motor, and $T_2$ is defined as the current limiting period of the electric motor below.

Referring to FIG. 7, the current limiting period $T_2$ is set to be the same as the period $T_1$ of the PWM signal. The control module 25 is configured to acquire a phase current value $I_{phase}$ of the electric motor 13 in real time through the current detection module 27 within a present period among the current limiting periods $T_2$ and compare the phase current value $I_{phase}$ with a preset current threshold $I_{ref}$. If the phase current value $I_{phase}$ exceeds the preset current threshold $I_{ref}$, an electronic switch is turned off within remaining time of the present period among the current limiting periods $T_2$ so that the current flowing towards the electric motor 13 is off, and an electronic switch is turned on when a present period $T_1$ of the PWM signal ends so that the current flowing towards the electric motor 13 is restored. In this example, the preset current threshold $I_{ref}$ may be set otherwise according to the type of the electric motor in an actual application and an actual application scenario. It is to be further noted here that the electronic switch turned off in this example is specifically the electronic switch which is in the on state at present and the electronic switch turned on in this example is the electronic switch which is controlled by the drive signal at present to be turned on.

Under a heavy load, since the power supply capability of a grid voltage is sufficiently great, an overcurrent may occur in the electric motor. As a result, components in the power tool are damaged, and the service life of the power tool is reduced. Referring to FIG. 7, the overcurrent occurs in the electric motor under the heavy load, which is indicated by point b in FIG. 7. With the preceding technical solution for limiting the current, when the phase current value $I_{phase}$ exceeds the preset current threshold $I_{ref}$, the control module 25 turns off the electronic switch immediately so that the current flowing through the electric motor 13 will not increase, which is indicated by point a in the figure. When the present period of the PWM signal ends, the control module 25 turns on the electronic switch again so that the current flowing towards the electric motor 13 is restored, which is indicated by point c in the figure. In this example, the current detection module detects the phase current of the electric motor 13 so that the current of the electric motor is limited period by period. Of course, a bus current value of the electric motor may be detected so that the current of the electric motor is limited period by period.

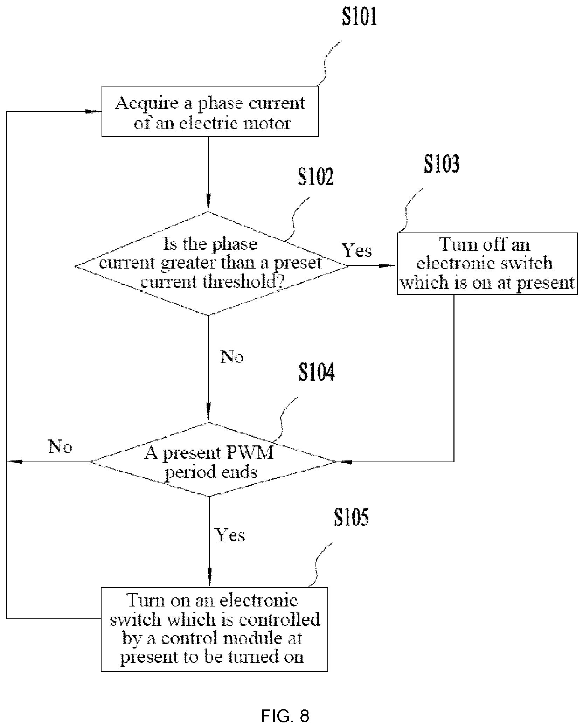

A control method of the electric motor in the power tool 10 within one current limiting period will be described below in detail in conjunction with FIG. 8. The method includes the steps described below.

In S101, the phase current value of the electric motor is acquired.

In S102, it is determined whether the phase current value of the electric motor exceeds the preset current threshold. If yes, S103 is performed. If no, S104 is performed.

In S103, the electronic switch which is on at present is turned off.

In S104, it is determined whether the present current limiting period ends. If yes, S105 is performed. If no, S101 is performed.

In S105, the electronic switch which is controlled by the drive signal at present to be turned on is turned on. The flow returns to S101.

When the load of a grid increases or decreases significantly, the grid voltage may fluctuate, thereby affecting a user's feel.

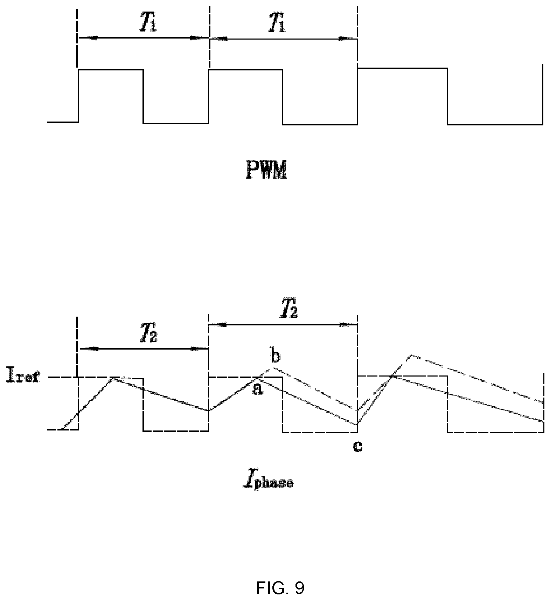

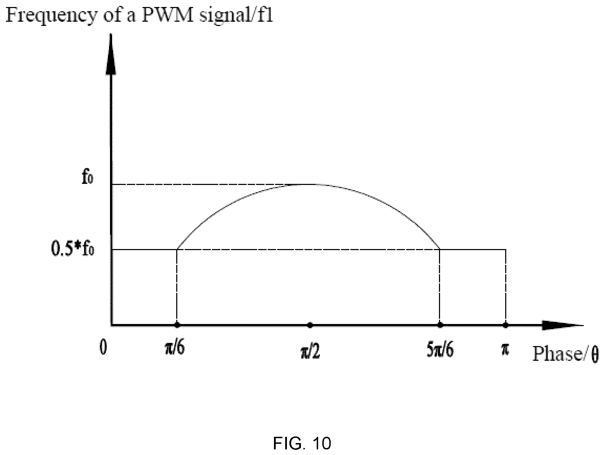

As shown in FIG. 9, in this example, the control module 25 controls the period $T_1$ of the PWM signal for driving the electric motor 13 to vary continuously within a first preset period range, and the current limiting period $T_2$ of the electric motor 13 is set to be the same as the period $T_1$ of the PWM signal. The first preset period range is optionally set to $[0.5T_0, 2T_0]$, where $T_0$ denotes an initial period of the PWM signal. When the grid voltage is lower than or equal to a present counter-electromotive force of the electric motor 13, the period T1 of the PWM signal keeps constant. On the contrary, when the grid voltage is higher than the present counter-electromotive force of the electric motor 13, the period T1 of the PWM signal varies continuously within the first preset range. In conjunction with FIGS. 9 and 10, the continuous variation which the period $T_1$ of the drive signal is set to perform within the first preset period range may be obtained through the following formula:
$$\frac{1}{T_1} = f_1 = \begin{cases} 0.5 * f_0 & 0 \leq \theta \leq \frac{\pi}{6} \text{ or } \frac{5\pi}{6} \leq \theta \leq \pi \\ f_0 * \sin\theta & \frac{\pi}{6} < \theta < \frac{5\pi}{6} \end{cases}$$
where $f_0$ denotes an initial frequency corresponding to the initial period $T_0$ of the PWM signal, $f_1$ denotes a frequency corresponding to the period $T_1$ of the PWM signal, and $\theta$ denotes a phase of a present grid voltage.

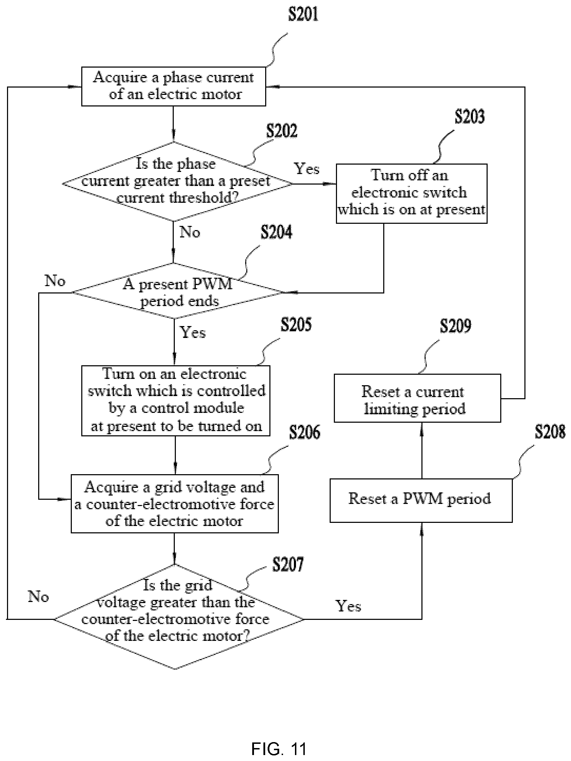

A control method for limiting the current of the electric motor 13 in the power tool 10 period by period will be described below in detail in conjunction with FIG. 11. The method includes the steps described below.

In S201, the phase current value of the electric motor is acquired.

In S202, it is determined whether the phase current value of the electric motor exceeds the preset current threshold. If yes, S203 is performed. If no, S204 is performed.

In S203, the electronic switch which is on at present is turned off.

In S204, it is determined whether the present current limiting period ends. If yes, S205 is performed. If no, S206 is performed.

In S205, the electronic switch which is controlled by the drive signal at present to be turned on is turned on.

In S206, the grid voltage and the counter-electromotive force of the electric motor are acquired.

In S207, it is determined whether the present counter-electromotive force of the electric motor exceeds the grid voltage. If yes, S208 is performed. If no, S201 is performed.

In S208, the period $T_1$ of the drive signal is reset.

In S209, the current limiting period $T_2$ is reset. The flow returns to S201.

In the first example described above, the control method for limiting the current of the power tool period by period is disclosed, where the current limiting period is the same as the period of the PWM signal all the time, the electronic switch is turned off when the detected phase current of the electric motor is greater than the preset current threshold, and the electronic switch is turned on again and the phase current of the electric motor continues to be detected in real time when the present period of the PWM signal ends. In another aspect, the period of the PWM signal is set to vary continuously with the fluctuation of the grid voltage within the first preset period range, which can make effective compensations in accordance with the fluctuation of the grid voltage to improve the user's feel and the service life of the power tool.

A second example of the present application will be described next.

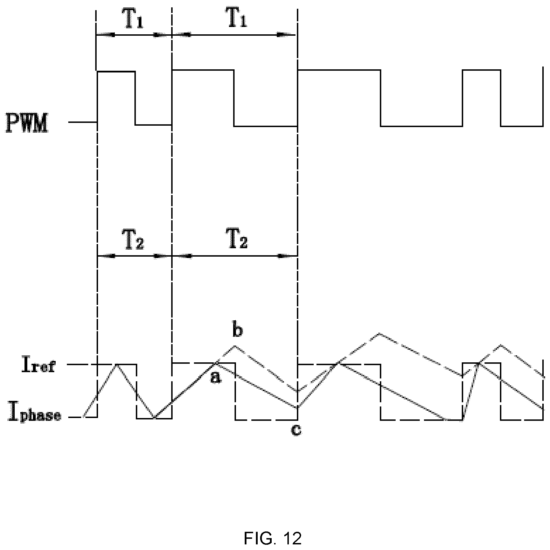

The second example differs from the first example described above in that the control module 25 controls the period $T_1$ of the PWM signal for driving the electric motor 13 to vary randomly within a second preset period range, and the current limiting period $T_2$ of the electric motor 13 is set to be the same as the period $T_1$ of the PWM signal all the time. Referring to FIG. 12, the period $T_1$ of the PWM signal varies randomly within the second preset period range. Specifically, it may be set that the initial period $T_0$ of the PWM period superimposed with a white noise varies according to the law of a normal distribution. In this example, the initial period $T_0$ of the PWM signal for driving the electric motor 13 is set to 100 us, and the period $T_1$ of the PWM signal superimposed with the white noise varies randomly within the second preset period range [98 us, 102 us], and the variation satisfies the law of the normal distribution.

The overcurrent occurs in the electric motor under the heavy load, which is indicated by point b in FIG. 12. With the preceding technical solution for limiting the current, when the phase current value $I_{phase}$ exceeds the preset current threshold $I_{ref}$, the control module 25 turns off the electronic switch immediately so that the current flowing through the electric motor 13 will not increase, which is indicated by point a in the figure. When the present period of the PWM signal ends, the control module 25 turns on the electronic switch again so that the current flowing towards the electric motor 13 is restored, which is indicated by point c in the figure. In this example, the current detection module detects the phase current of the electric motor 13 so that the current of the electric motor is limited period by period. Of course, the bus current value of the electric motor may be detected so that the current of the electric motor is limited period by period.

It is to be noted that the second preset range set in this example should be set autonomously according to the actual application scenario of the power tool.

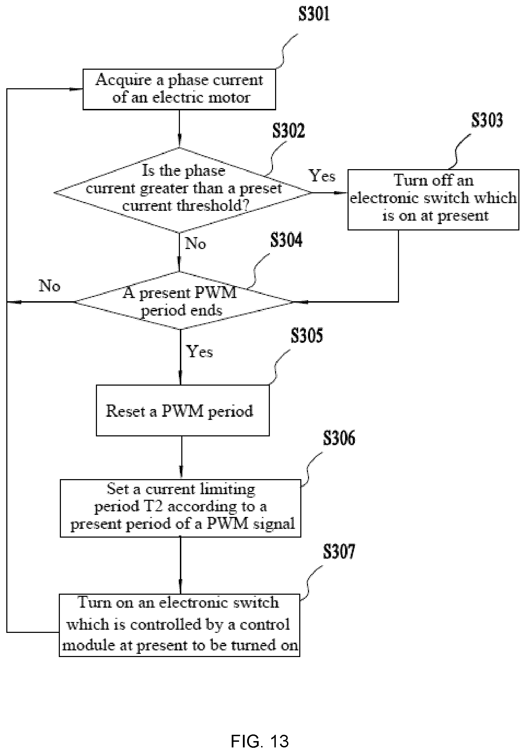

A control method for limiting the current of the electric motor 13 in the power tool 10 period by period will be described below in detail in conjunction with FIG. 13. The method includes the steps described below.

In S301, the phase current value of the electric motor is acquired.

In S302, it is determined whether the phase current value of the electric motor exceeds the preset current threshold. If yes, S303 is performed. If no, S304 is performed.

In S303, the electronic switch which is on at present is turned off.

In S304, it is determined whether the present current limiting period ends. If yes, S305 is performed. If no, S301 is performed.

In S305, the period $T_1$ of the drive signal is reset.

In S305, the current limiting period $T_2$ is set according to the reset period $T_1$ of the drive signal.

In S305, the electronic switch which is controlled by the drive signal at present to be turned on is turned on. The flow returns to S301.

In the second example described above, the control method for limiting the current of the power tool period by period is disclosed, where the current limiting period is the same as the period of the PWM signal all the time, the electronic switch is turned off when the detected phase current of the electric motor is greater than the preset current threshold, and the electronic switch is turned on again and the phase current of the electric motor continues to be detected in real time when the present period of the PWM signal ends. In another aspect, the period of the PWM signal is set to vary randomly within the second preset period range. The preceding random variation satisfies the law of the normal distribution. In this example, the period of the PWM signal is set to vary randomly according to the law of the normal distribution within the preset range, and the EMI of the driver circuit is reduced through frequency jitter. Thus, the reliability of the power tool is improved.

A third example of the present application will be described next.

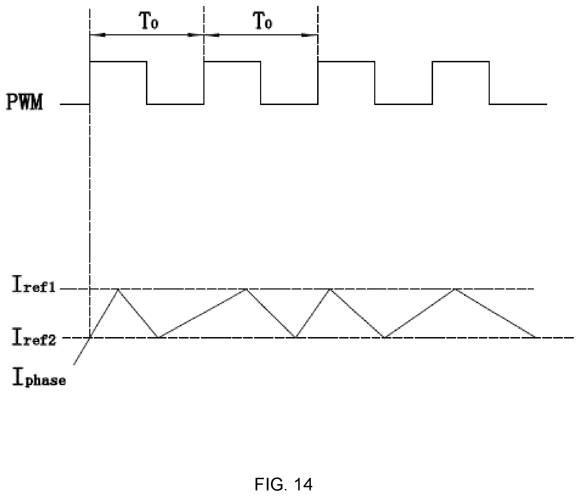

The third example differs from the preceding example in that the control module 25 outputs the PWM signal having the initial period $T_0$ to control the driver circuit 24 to drive the electric motor 13 to operate, as shown in FIG. 14. The control module 25 acquires the phase current value of the electric motor 13 in real time through the current detection module 27 and compares the acquired phase current value with a preset current range. In this example, preset current thresholds include a first preset current threshold $I_{ref1}$ and a second preset current threshold $I_{ref2}$. The first preset current threshold $I_{ref1}$ is set as an upper limit, and the second preset current threshold $I_{ref2}$ is set as a lower limit. When the phase current value $I_{phase}$ of the electric motor 13 acquired by the control module 25 is greater than the first preset current threshold $I_{ref1}$, the control module 25 immediately turns off the electronic switch which is in the on state at present. When the phase current value $I_{phase}$ of the electric motor 13 acquired by the control module 25 is less than the second preset current threshold $I_{ref2}$, the control module 25 controls the electronic switch which is controlled by the drive signal at present to be turned on to be turned on. In a specific setting process, the difference between the first preset current threshold $I_{ref1}$ and the second preset current threshold $I_{ref2}$ is inversely proportional to an inductance value of the electric motor and is proportional to the counter-electromotive force of the electric motor in a normal working process. Those skilled in the art may rationally design the preset current range according to the type of the electric motor and the actual application scenario.

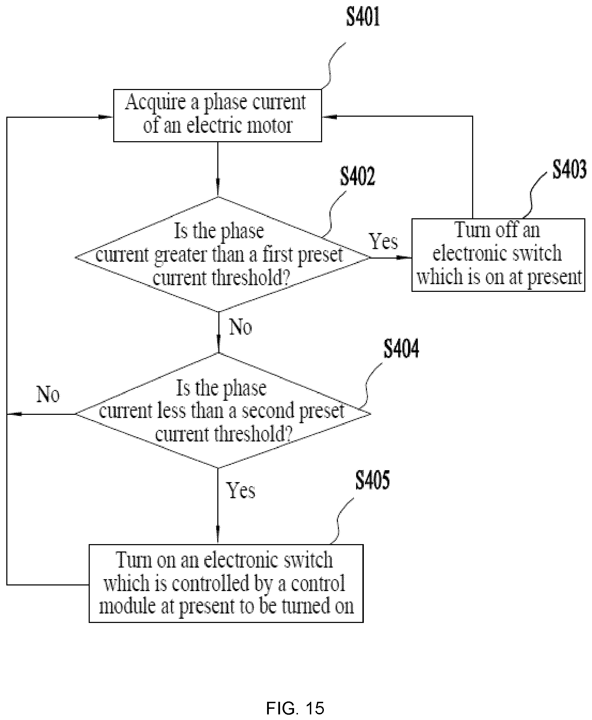

A control method for limiting the current of the electric motor 13 in the power tool 10 period by period will be described below in detail in conjunction with FIG. 15. The method includes the steps described below.

In S401, the phase current value of the electric motor is acquired.

In S402, it is determined whether the phase current value of the electric motor is greater than the first preset current threshold. If yes, S403 is performed. If no, S404 is performed.

In S403, the electronic switch which is on at present is turned off.

In S404, it is determined whether the phase current value of the electric motor is less than the second preset current threshold. If yes, S405 is performed. If no, S401 is performed.

In S405, the electronic switch which is controlled by the drive signal at present to be turned on is turned on. The flow returns to S401.

In the third example described above, the control method for limiting the current of the power tool period by period is disclosed, where the phase current of the electric motor is acquired through the current detection module, the electronic switch is turned off once it is detected that the phase current exceeds the first preset current threshold, and the electronic switch is turned on and the current flowing towards the electric motor is restored once the phase current value of the electric motor is less than the second preset current threshold. A large current occurring during the work of the electric motor may be simply and effectively suppressed through the technical solution in the preceding example, and the feeling of using the power tool is not affected.

It is to be understood that in the first example and the second example described above, the preset current threshold is set so that no large current occurs in the electric motor, thereby protecting electronic components. However, due to the existence of the current limiting period in the first example and the second example described above, the current flowing through the electric motor may generate a second harmonic when the preset current threshold is a fixed value.

A fourth example of the present application will be described next.

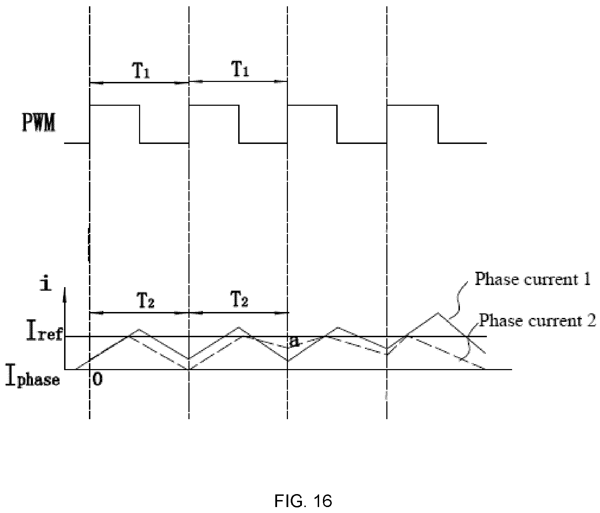

Referring to FIG. 16, the preset current threshold $I_{ref}$ is optionally set as the fixed value, and the phase current acquired in real time is compared with the preset current threshold $I_{ref}$, where phase current 1 is the waveform of the phase current value $I_{phase}$ of the electric motor in a normal working state, and phase current 2 is the waveform of the phase current value $I_{phase}$ of the electric motor after the current is limited. When the phase current value $I_{phase}$ exceeds the preset current threshold $I_{ref}$, the electronic switch which is in the on state at present is turned off within the remaining time of the present period among the current limiting periods $T_2$ so that the current flowing towards the electric motor is off, and the electronic switch is turned on when the present period $T_1$ of the PWM signal ends so that the current flowing towards the electric motor is restored. According to the preceding current limiting method, the second harmonic indicated by point a in FIG. 16 will appear, which will affect the normal operation of the power tool.

In order that the problem in the first example and the second example described above is solved, the preset current threshold $I_{ref}$ in this example is not fixed and satisfies the variation law of a preset waveform.

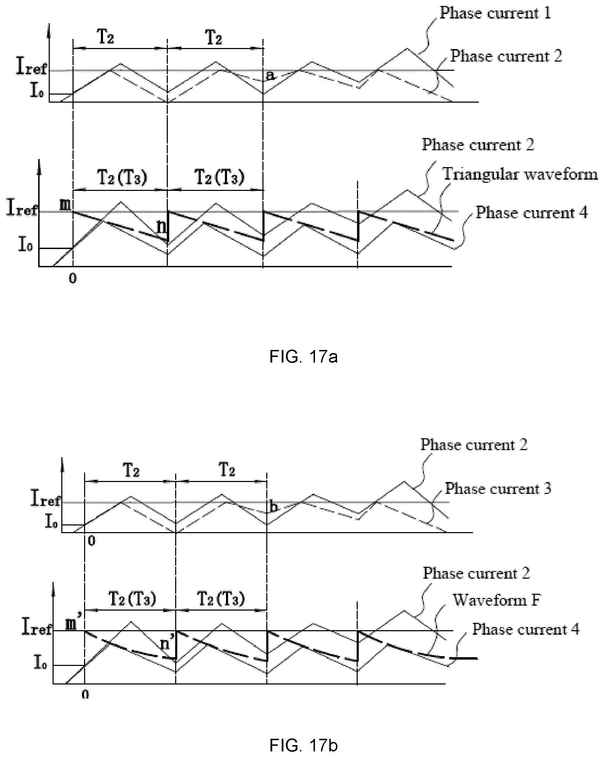

Referring to FIG. 17a, the preset waveform is optionally set as a triangular waveform, and a period $T_3$ of the triangular waveform is the same as the current limiting period $T_2$. The slope K of the triangular waveform is in the following range:

$$ -\frac{I_{ref} - I_0}{T_3} \leq K \leq 0; $$

where $I_0$ denotes the phase current value at a power-on moment. It is to be understood that those skilled in the art may typically debug a specific circuit to set $I_{ref}$ to a value so that the relatively proper value is acquired. It is to be understood that the manner in which the range of K is calculated is provided in this example, but a value of K needs to be acquired by those skilled in the art by debugging the circuit within the preceding range of K.

Referring to FIG. 17a, phase current 1 is the waveform of the phase current of the electric motor whose current is not limited, phase current 2 is the waveform of the phase current of the electric motor when the preset current threshold $I_{ref}$ is the fixed value, and phase current 4 is the waveform of the phase current of the electric motor when the preset current threshold $I_{ref}$ has the triangular waveform. It may be clearly seen from FIG. 17a that no significant second harmonic is generated in the phase current of the electric motor in phase current 4.

The preset waveform in this example is the triangular waveform. Of course, the preset waveform may be set as a waveform including a curve. Referring to FIG. 17b, the preceding waveform including the curve is defined as waveform F here, and a period $T_4$ of waveform F is the same as the current limiting period $T_2$. It is to be understood that the current value at the beginning of a current limiting period $T_2$ in waveform F is the same as the current value at the beginning of a current limiting period $T_2$ in the triangular waveform. Similarly, the current value at the end of a current limiting period $T_2$ in waveform F is the same as the current value at the end of a current limiting period $T_2$ in the triangular waveform. In other words, point m and point n in FIG. 17a correspond to point m' and point n' in FIG. 17b, respectively. Referring to FIG. 17b, phase current 2 is the waveform of the phase current of the electric motor when the preset current threshold $I_{max}$ is the fixed value, and phase current 4 is the waveform of the phase current of the electric motor when the preset current threshold $I_{max}$ has waveform F. It may be clearly seen from FIG. 17b that no significant second harmonic is generated in the phase current of the electric motor in phase current 4. Of course, a specific parameter of waveform F needs to be designed according to a specific circuit structure. It is to be further noted here that the preset waveform in the preceding example is not limited to the triangular waveform and the waveform including the curve described above. In the preset waveform, a current threshold corresponding to the end of the present current limiting period $T_2$ is less than a current threshold corresponding to the beginning of the present current limiting period $T_2$.

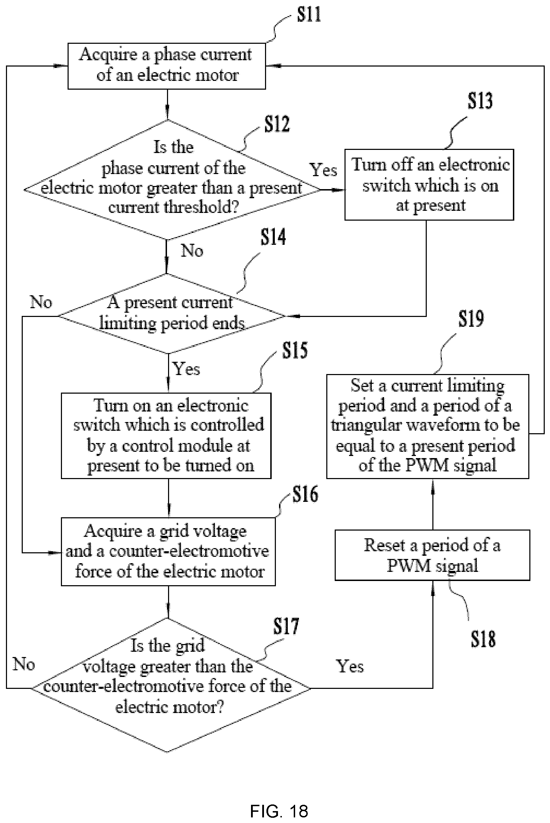

In conjunction with FIG. 18, a control method for limiting the current period by period will be described next in detail through the example in which the preset waveform is the triangular waveform. The method includes the steps described below.

In S11, the phase current value of the electric motor is acquired.

In S12, it is determined whether the phase current value of the electric motor exceeds a present preset current threshold. If yes, S203 is performed. If no, S204 is performed.

In S13, the electronic switch which is on at present is turned off.

In S14, it is determined whether the present current limiting period ends. If yes, S205 is performed. If no, S206 is performed.

In S15, the electronic switch which is controlled by the PWM signal at present to be turned on is turned on.

In S16, the grid voltage and the counter-electromotive force of the electric motor are acquired.

In S17, it is determined whether the present counter-electromotive force of the electric motor exceeds the grid voltage. If yes, S208 is performed. If no, S201 is performed.

In S18, the period of the PWM signal is reset.

In S19, the current limiting period T and the period of the triangular waveform are set to be equal to the present period of the PWM signal. The flow returns to S201.

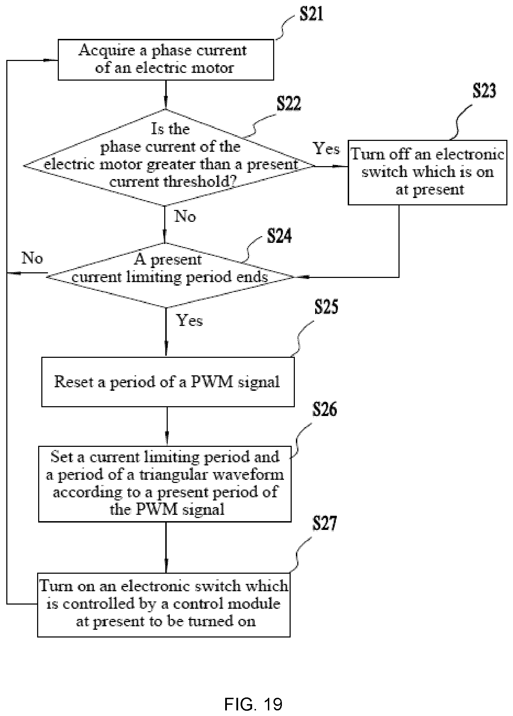

In conjunction with FIG. 19, a control method for limiting the current period by period will be described next in detail through the example in which the preset waveform is the triangular waveform. The method includes the steps described below.

In S21, the phase current value of the electric motor is acquired.

In S22, it is determined whether the phase current value of the electric motor exceeds a present current threshold. If yes, S23 is performed. If no, S24 is performed.

In S23, the electronic switch which is on at present is turned off.

In S24, it is determined whether the present current limiting period ends. If yes, S25 is performed. If no, S21 is performed.

In S25, the period of the PWM signal is reset.

In S26, the current limiting period and the period of the triangular waveform are set to be equal to the present period of the PWM signal.

In S27, the electronic switch which is controlled by the drive signal at present to be turned on is turned on. The flow returns to S21.

**Claims**

1. A power tool (10), comprising:

   a housing (11);
   an electric motor (13) disposed in the housing (11);
   a driver circuit (24) comprising a plurality of electronic switches (Q1, Q2, Q3, Q4, Q5, Q6);
   a control module (25) electrically connected to the driver circuit (24) and outputting a drive signal to control the driver circuit (24) to cause the electric motor (13) to operate; and
   a current detection module (27) configured to acquire a current value of the electric motor (13);

   wherein the control module (25) is further configured to:

   acquire a bus current value of the electric motor (13) or a phase current value of the electric motor (13) in real time through the current detection module (27) within periodic time intervals; and
   turn off an on-state electronic switch among the plurality of electronic switches (Q1, Q2, Q3, Q4, Q5, Q6) within remaining time of a present time interval when the acquired bus current value of the electric motor (13) or the phase current value exceeds a preset current threshold, wherein the current flowing through the electric motor (13) will not increase when turning off the electronic switch;
   and
   turn on an electronic switch among the plurality of electronic switches (Q1, Q2, Q3, Q4, Q5, Q6) which is controlled by the control module (25) at present to be on when a present period of the drive signal ends, wherein the current flowing towards the electric motor (13) is restored when turning on the electronic switch;

wherein a duration of each time interval among the periodic time intervals is the same as a period corresponding to the drive signal at present; and a period of the drive signal varies randomly within a preset period range;

**characterized in that**

the preset current threshold is not fixed and satisfies a variation law of a preset waveform.

2. The power tool (10) according to claim 1, wherein the random variation of the period of the drive signal within the preset period range follows a law of a normal distribution.

3. The power tool (10) according to claim 1, wherein a period of the preset waveform is the same as the period of the drive signal or the duration of each time interval among the periodic time intervals.

4. The power tool (10) according to claim 3, wherein the preset waveform is set as a triangular waveform or a waveform comprising a curve.

5. The power tool (10) according to claim 4, wherein a preset current threshold corresponding to an end of the present time interval is less than a preset current threshold corresponding to a beginning of the present time interval.

6. The power tool (10) according to claim 1, further comprising:
a power supply input device (15) and a rectifier module (21), wherein the power supply input device (15) is configured to access a power supply required by the power tool when working, and the rectifier module (21) is configured to be electrically connected to the power supply input device (15) and convert electrical energy of the power supply input device (15) into a direct current for the power tool to use.

7. The power tool (10) according to claim 6, further comprising:
a power supply circuit (23) and a capacitor circuit (22), wherein the power supply circuit is electrically connected to the rectifier module (21) to supply power to at least the control module (25), and the capacitor circuit (22) is electrically connected between the rectifier module (21) and the driver circuit (24).

8. The power tool (10) according to claim 7, wherein the capacitor circuit (22) comprises at least one electrolytic capacitor (C).

9. The power tool (10) according to claim 8, wherein a ratio of a capacitance value of the electrolytic capacitor (C) to rated power of the electric motor (13) is higher than 20 $\mu$F/kW and lower than 80 $\mu$F/kW.

10. The power tool (10) according to claim 9, wherein the rectifier module comprises a rectifier bridge constituted by four diodes D1, D2, D3, and D4.

11. The power tool (10) according to claim 10, wherein the current detection module (27) is electrically connected between the control module (25) and the electric motor (13) and comprises a plurality of current detection resistors (R1, R2, R3).

12. The power tool (10) according to claim 1, wherein the electric motor (13) is configured to be a brushless direct current motor.

13. The power tool (10) according to claim 12, wherein the brushless direct current motor is controlled by the drive signal.

14. The power tool (10) according to claim 1, further comprising:
a rotational speed detection module (26) configured to acquire a rotational speed of the electric motor (13) and a position of a rotor of the electric motor (13).

**Patentansprüche**

1. Ein Elektrowerkzeug (10), umfassend:

ein Gehäuse (11);
einen Elektromotor (13), der im Gehäuse (11) angeordnet ist;

eine Ansteuerschaltung (24), die eine Vielzahl von elektronischen Schaltern (Q1, Q2, Q3, Q4, Q5, Q6) umfasst; ein Steuermodul (25), das elektrisch mit der Ansteuerschaltung (24) verbunden ist und ein Ansteuersignal ausgibt, um die Ansteuerschaltung (24) zur Betätigung des Elektromotors (13) anzusteuern; und ein Stromerfassungsmodul (27), das dazu konfiguriert ist, einen Stromwert des Elektromotors (13) zu erfassen; wobei das Steuermodul (25) ferner dazu konfiguriert ist:

einen Busstromwert des Elektromotors (13) oder einen Phasenstromwert des Elektromotors (13) in Echtzeit über das Stromerfassungsmodul (27) innerhalb periodischer Zeitintervalle zu erfassen; und einen eingeschalteten elektronischen Schalter unter der Vielzahl von elektronischen Schaltern (Q1, Q2, Q3, Q4, Q5, Q6) innerhalb der verbleibenden Zeit eines aktuellen Zeitintervalls auszuschalten, wenn der erfasste Busstromwert des Elektromotors (13) oder der Phasenstromwert einen voreingestellten Stromschwellenwert überschreitet, wobei der durch den Elektromotor (13) fließende Strom beim Ausschalten des elektronischen Schalters nicht zunimmt; und einen elektronischen Schalter unter der Vielzahl von elektronischen Schaltern (Q1, Q2, Q3, Q4, Q5, Q6), der gegenwärtig durch das Steuermodul (25) zum Einschalten angesteuert wird, einzuschalten, wenn eine aktuelle Periode des Ansteuersignals endet, wobei der in Richtung des Elektromotors (13) fließende Strom beim Einschalten des elektronischen Schalters wiederhergestellt wird; wobei eine Dauer jedes Zeitintervalls unter den periodischen Zeitintervallen gleich der Periode ist, die dem gegenwärtigen Ansteuersignal entspricht; und eine Periode des Ansteuersignals sich zufällig innerhalb eines voreingestellten Periodenbereichs ändert; **dadurch gekennzeichnet, dass** der voreingestellte Stromschwellenwert nicht fest ist und einem Veränderungsgesetz einer voreingestellten Wellenform entspricht.

2. Das Elektrowerkzeug (10) nach Anspruch 1, wobei sich die zufällige Änderung der Periode des Ansteuersignals innerhalb des voreingestellten Periodenbereichs gemäß einem Gesetz einer Normalverteilung vollzieht.

3. Das Elektrowerkzeug (10) nach Anspruch 1, wobei eine Periode der voreingestellten Wellenform gleich der Periode des Ansteuersignals oder gleich der Dauer jedes Zeitintervalls unter den periodischen Zeitintervallen ist.

4. Das Elektrowerkzeug (10) nach Anspruch 3, wobei die voreingestellte Wellenform als eine Dreieckswellenform oder als eine Wellenform mit einer Kurve eingestellt ist.

5. Das Elektrowerkzeug (10) nach Anspruch 4, wobei ein voreingestellter Stromschwellenwert, der einem Ende des aktuellen Zeitintervalls entspricht, kleiner ist als ein voreingestellter Stromschwellenwert, der einem Anfang des aktuellen Zeitintervalls entspricht.

6. Das Elektrowerkzeug (10) nach Anspruch 1, ferner umfassend: eine Stromeingangsvorrichtung (15) und ein Gleichrichtermodule (21), wobei die Stromeingangsvorrichtung (15) dazu konfiguriert ist, eine Stromversorgung bereitzustellen, die das Elektrowerkzeug während des Betriebs benötigt, und das Gleichrichtermodule (21) dazu konfiguriert ist, elektrisch mit der Stromeingangsvorrichtung (15) verbunden zu sein und elektrische Energie der Stromeingangsvorrichtung (15) in Gleichstrom umzuwandeln, der vom Elektrowerkzeug verwendet wird.

7. Das Elektrowerkzeug (10) nach Anspruch 6, ferner umfassend: eine Stromversorgungsschaltung (23) und eine Kondensatorschaltung (22), wobei die Stromversorgungsschaltung elektrisch mit dem Gleichrichtermodule (21) verbunden ist, um zumindest das Steuermodul (25) mit Strom zu versorgen, und die Kondensatorschaltung (22) elektrisch zwischen dem Gleichrichtermodule (21) und der Ansteuerschaltung (24) angeschlossen ist.

8. Das Elektrowerkzeug (10) nach Anspruch 7, wobei die Kondensatorschaltung (22) mindestens einen Elektrolytkondensator (C) umfasst.

9. Das Elektrowerkzeug (10) nach Anspruch 8, wobei ein Verhältnis eines Kapazitätswerts des Elektrolytkondensators (C) zur Nennleistung des Elektromotors (13) größer als 20 $\mu$F/kW und kleiner als 80 $\mu$F/kW ist.

10. Das Elektrowerkzeug (10) nach Anspruch 9, wobei das Gleichrichtermodule eine Gleichrichterbrücke umfasst, die aus vier Dioden D1, D2, D3 und D4 gebildet ist.

**11.** Das Elektrowerkzeug (10) nach Anspruch 10, wobei das Stromerfassungsmodul (27) elektrisch zwischen dem Steuermodul (25) und dem Elektromotor (13) angeschlossen ist und eine Vielzahl von Stromerfassungswiderständen (R1, R2, R3) umfasst.

**12.** Das Elektrowerkzeug (10) nach Anspruch 1, wobei der Elektromotor (13) als ein bürstenloser Gleichstrommotor konfiguriert ist.

**13.** Das Elektrowerkzeug (10) nach Anspruch 12, wobei der bürstenlose Gleichstrommotor durch das Ansteuersignal angesteuert wird.

**14.** Das Elektrowerkzeug (10) nach Anspruch 1, ferner umfassend:
ein Drehzahlerfassungsmodul (26), das dazu konfiguriert ist, eine Drehzahl des Elektromotors (13) und eine Rotorposition des Elektromotors (13) zu erfassen.

**Revendications**

**1.** Un outil électrique (10), comprenant :

un boîtier (11) ;
un moteur électrique (13) disposé dans le boîtier (11) ;
un circuit de commande (24) comprenant une pluralité d'interrupteurs électroniques (Q1, Q2, Q3, Q4, Q5, Q6) ;
un module de commande (25) connecté électriquement au circuit de commande (24) et configuré pour délivrer un signal de commande destiné à commander le circuit de commande (24) afin de faire fonctionner le moteur électrique (13) ;
et un module de détection de courant (27) configuré pour acquérir une valeur de courant du moteur électrique (13) ;
dans lequel le module de commande (25) est en outre configuré pour :

acquérir une valeur de courant de bus du moteur électrique (13) ou une valeur de courant de phase du moteur électrique (13) en temps réel via le module de détection de courant (27) à l'intérieur d'intervalles de temps périodiques ;
et désactiver un interrupteur électronique en état de conduction parmi la pluralité d'interrupteurs électroniques (Q1, Q2, Q3, Q4, Q5, Q6) dans le temps restant d'un intervalle de temps actuel lorsque la valeur de courant de bus du moteur électrique (13) ou la valeur de courant de phase acquise dépasse un seuil de courant prédéfini, la valeur de courant traversant le moteur électrique (13) n'augmentant pas lorsque l'interrupteur électronique est désactivé ;
et activer un interrupteur électronique parmi la pluralité d'interrupteurs électroniques (Q1, Q2, Q3, Q4, Q5, Q6) qui est actuellement commandé pour être actif par le module de commande (25) à la fin de la période actuelle du signal de commande, le courant allant vers le moteur électrique (13) étant rétabli lors de l'activation de l'interrupteur électronique ;
dans lequel une durée de chaque intervalle de temps parmi les intervalles de temps périodiques est identique à une période correspondant au signal de commande actuel ; et une période du signal de commande varie aléatoirement à l'intérieur d'une plage de période prédéfinie ;
**caractérisé en ce que**
le seuil de courant prédéfini n'est pas fixe et suit une loi de variation d'une forme d'onde prédéfinie.

**2.** L'outil électrique (10) selon la revendication 1, dans lequel la variation aléatoire de la période du signal de commande à l'intérieur de la plage de période prédéfinie suit une loi de distribution normale.

**3.** L'outil électrique (10) selon la revendication 1, dans lequel une période de la forme d'onde prédéfinie est identique à la période du signal de commande ou à la durée de chaque intervalle de temps parmi les intervalles de temps périodiques.

**4.** L'outil électrique (10) selon la revendication 3, dans lequel la forme d'onde prédéfinie est définie comme une onde triangulaire ou une onde comprenant une courbe.

**5.** L'outil électrique (10) selon la revendication 4, dans lequel un seuil de courant prédéfini correspondant à une fin de l'intervalle de temps actuel est inférieur à un seuil de courant prédéfini correspondant à un début de l'intervalle de temps actuel.

6. L'outil électrique (10) selon la revendication 1, comprenant en outre :
un dispositif d'entrée d'alimentation (15) et un module redresseur (21), dans lequel le dispositif d'entrée d'alimentation (15) est configuré pour accéder à une source d'alimentation requise par l'outil électrique pendant le fonctionnement, et le module redresseur (21) est configuré pour être connecté électriquement au dispositif d'entrée d'alimentation (15) et convertir l'énergie électrique du dispositif d'entrée d'alimentation (15) en courant continu destiné à être utilisé par l'outil électrique.

7. L'outil électrique (10) selon la revendication 6, comprenant en outre :
un circuit d'alimentation (23) et un circuit de condensateur (22), dans lequel le circuit d'alimentation est connecté électriquement au module redresseur (21) pour fournir de l'énergie au moins au module de commande (25), et le circuit de condensateur (22) est connecté électriquement entre le module redresseur (21) et le circuit de commande (24).

8. L'outil électrique (10) selon la revendication 7, dans lequel le circuit de condensateur (22) comprend au moins un condensateur électrolytique (C).

9. L'outil électrique (10) selon la revendication 8, dans lequel un rapport entre une valeur de capacité du condensateur électrolytique (C) et la puissance nominale du moteur électrique (13) est supérieur à 20 $\mu$F/kW et inférieur à 80 $\mu$F/kW.

10. L'outil électrique (10) selon la revendication 9, dans lequel le module redresseur comprend un pont redresseur constitué de quatre diodes D1, D2, D3 et D4.

11. L'outil électrique (10) selon la revendication 10, dans lequel le module de détection de courant (27) est connecté électriquement entre le module de commande (25) et le moteur électrique (13) et comprend une pluralité de résistances de détection de courant (R1, R2, R3).

12. L'outil électrique (10) selon la revendication 1, dans lequel le moteur électrique (13) est configuré pour être un moteur à courant continu sans balais.

13. L'outil électrique (10) selon la revendication 12, dans lequel le moteur à courant continu sans balais est commandé par le signal de commande.

14. L'outil électrique (10) selon la revendication 1, comprenant en outre :
un module de détection de vitesse de rotation (26) configuré pour acquérir une vitesse de rotation du moteur électrique (13) et une position d'un rotor du moteur électrique (13).

FIG. 1

FIG. 2

FIG. 3

FIG. 4

FIG. 5

FIG. 6

FIG. 7

S101

Acquire a phase current
of an electric motor

S102          S103

Is the phase
current greater than a preset     Yes     Turn off an
current threshold?                        electronic switch
                                          which is on at present

No

S104

No     A present PWM
       period ends

Yes          S105

Turn on an electronic
switch which is controlled
by a control module at
present to be turned on

FIG. 8

FIG. 9

FIG. 10

S201

Acquire a phase current
of an electric motor

S202

Is the phase
current greater than a preset
current threshold?

Yes

S203

Turn off an
electronic switch
which is on at present

No

S204

A present PWM
period ends

No

Yes

S205

Turn on an electronic
switch which is controlled
by a control module
at present to be turned on

S206

Acquire a grid voltage and
a counter-electromotive force
of the electric motor

S207

Is the grid
voltage greater than the
counter-electromotive force
of the electric motor?

No

Yes

S209

Reset a current
limiting period

S208

Reset a PWM period

FIG. 11

FIG. 12

S301

Acquire a phase current
of an electric motor

S302

S303

Is the phase
current greater than a preset
current threshold?

Yes

Turn off an
electronic switch which
is on at present

No

S304

No

A present PWM
period ends

Yes

S305

Reset a PWM period

S306

Set a current limiting
period T2 according to a
present period of a PWM signal

S307

Turn on an electronic switch
which is controlled by a control
module at present to be turned on

FIG. 13

FIG. 14

S401

Acquire a phase current
of an electric motor

S402

S403

Is the phase
current greater than a first preset
current threshold?

Yes

Turn off an
electronic switch
which is on at present

No

S404

Is the phase
current less than a second preset
current threshold?

No

Yes

S405

Turn on an electronic switch
which is controlled by a control
module at present to be turned on

FIG. 15

FIG. 16

FIG. 17a

FIG. 17b

S11

Acquire a phase current
of an electric motor

S12

Is the
phase current of the
electric motor greater than a present
current threshold?

Yes → S13

Turn off an electronic
switch which is on
at present

No

S14

A present current
limiting period ends

No

Yes

S15

Turn on an electronic
switch which is controlled
by a control module at
present to be turned on

S19

Set a current limiting
period and a period of a
triangular waveform to be
equal to a present period
of the PWM signal

S16

Acquire a grid voltage
and a counter-electromotive
force of the electric motor

Reset a period of a
PWM signal

S18

S17

Is the grid
voltage greater than the
counter-electromotive force of the
electric motor?

No

Yes

FIG. 18

FIG. 19

**REFERENCES CITED IN THE DESCRIPTION**

**Patent documents cited in the description**

- US 2020162007 A1
- US 2019337065 A1